# EUROPÄISCHE PATENTANMELDUNG

(11) **EP 0 531 952 A1**
(43) Veröffentlichungstag der Anmeldung: **17.03.1993**
(21) Anmeldenummer: 92115364.9
(22) Anmeldetag: 09.09.1992
(51) Int. Cl.: A21C 1/00, A21C 9/00, A21C 11/10

(54) **Verfahren und Vorrichtung zur Aufbereitung von Restteig für Neuteig**

(30) Priorität: 10.09.1991 DE 4130021
(71) Anmelder: A. FRITSCH GMBH & CO. KG, D-97348 Markt Einersheim (DE)
(72) Erfinder: Hayn, Peter, Dr., W-8717 Mainbernheim (DE)
(74) Vertreter: Matschkur, Götz, Lindner Patent- und Rechtsanwälte

(57) **Zusammenfassung**

Verfahren zur Aufbereitung von Restteig für Neuteig, indem der Restteig mit Mehl gemischt und/oder geknetet und diese Mischung zerkleinert wird, wobei das Zerkleinern mittels einer Pelletiereinrichtung durchgeführt wird.

## Beschreibung

Die Erfindung betrifft ein Verfahren zur Aufbereitung von Restteig für Neuteig, indem der Restteig mit Mehl gemischt und/oder geknetet und diese Mischung verkleinert wird. Ferner betrifft die Erfindung eine Vorrichtung zur Aufbereitung von Restteig für Neuteig, welche mindestens eine Zuführ- und Dosiereinrichtung je für Restteig und für zuzumischendes Mehl aufweist, denen Misch-/Knet- sowie Zerkleinerungseinrichtungen nachgeschaltet sind; insbesondere ist diese Vorrichtung zur Durchführung des Verfahrens ausgelegt.

Bei einer bekannten Restteig-Aufbereitungsmaschine (Patentschrift DE 34 44 440 C1) wird der Restteig zunächst zu einem Teigband geformt, das Teigband zerkleinert und zermahlen sowie mit Mehl in einem dem Neuteig entsprechenden Verhältnis gemischt und in Form eines rieselfähigen, feinkörnigen, lagerfähigen Substrats ausgetragen. Zum Zerkleinern, Zermahlen und Vermischen wird eine liegend angeordnete zylindrische Trommel verwendet, in die das geformte Teigband eingeführt und darin mittels eines zylindrischen Werkzeugträgers weiter verarbeitet wird. Hierzu ist der Werkzeugträger mit einer Vielfalt unterschiedlicher Werkzeuge ausgestattet, nämlich Schneidmesser mit schräg in Förderrichtung der Trommel freiragenden Messerfingern, zusätzliche Strömungsleitbleche, einem Mahlsieb, an dessen Innenfläche schaufelförmige Werkzeuge umlaufen, u.a. Es liegt auf der Hand, daß diese Vielfalt unterschiedlicher Werkzeuge, die für das Zerkleinern, Zermahlen und Vermischen mit Mehl verwendet werden, einen hohen konstruktiven und gerätetechnischen Aufwand erfordert. Zudem müssen die verwendeten Schneidmesser aus mit schräg in Förderrichtung der Trommel freiragenden Messerfingern besetzten Messerträgern und/oder die genannten Strömungsleitbleche mit hohen Drehzahlen umlaufen, um ein rieselfähiges und feinkörniges Substrat zu erhalten. Dies erhöht beim die Unfall- und Verletzungsgefahr für das Betriebs- und Wartungspersonal. Ferner ist die Zuführung von Mehl und Restteig nicht ausreichend koordiniert, so daß in der Aufbereitungsanlage Mehlüberschuss auftreten kann; bei Austrag und Abscheidung mittels eines Zyklons entsteht die Gefahr von Staubexplosionen.

Nach alledem ergibt sich das der Erfindung zugrundeliegende Problem, eine Restteig-Aufbereitungsanlage zu schaffen, die sich durch eine vereinfachte Konstruktion und einen verminderten gerätetechnischen Aufwand, sowie eine erhöhte Betriebs- und Arbeitssicherheit und -zuverlässigkeit auszeichnet. Zur Lösung wird bei dem eingangs genannten Verfahren erfindungsgemäß vorgeschlagen, daß jedenfalls das Zerkleinern mittels einer Pelletiereinrichtung durchgeführt wird. Hiernach wird also der bisher eingeschlagene Weg, den Restteig in einem einzigen Werkzeug zu feinkörnigem Substrat umzuwandeln, verlassen; stattdessen wird der Schritt des Pelletierens des Restteigs, das heißt des Formens von kugelförmigen oder länglichen Stücken, eingeführt, was mit relativ einfachem und langsam rotierendem Werkzeug beispielsweise in einer zylindrischen Trommel oder auf einem geneigten Teller mit Drehbewegungen erfolgen kann.

In Weiterbildung des Verfahrens wird das dem Pelletieren vorhergehende Mischen/Kneten durch Extrudieren herbeigeführt. Dies umfaßt das Fressen des Restteigs zu einem Strang mit gleichzeitiger Förderung, die dann zur Pelletiereinrichtung erfolgen kann. Im Zusammenhang mit dem Einsatz des Extruders zum Mischen/Kneten des Restteigs ergibt sich der Vorteil, daß der Extruder bei einer derart niedrigen Drehzahl immer noch funktionsgerecht betrieben werden kann, so daß eine spürbare Temperaturerhöhung der Restteig/Mehl-Mischung vermieden ist.

Nach einer anderen Weiterbildung der Erfindung wird nach dem Pelletieren der weitere Schritt des Mahlens der Pellets zu Granulat eingeführt, wobei noch zusätzlich Mehl hinzugegeben werden kann. Der Vorteil besteht darin, daß auf dem Markt erhältliche und als Anlagen-Komponenten einsetzbare Turbomühlen verwendbar sind. An deren Ausgang entsteht dann ein Trägerluftstrom, von dem mittels an sich bekannter Abscheideverfahren die Granulatkörnchen zur Verwendung für den Neuteig trennbar sind. Unter diesem Aspekt ist es von Vorteil, das Mischungsverhältnis Restteig/Mehl so zu wählen, daß ein Zusammenkleben der Granulatkörnchen und/oder schon der Pellets weitgehend verhindert ist.

In weiterer Ausbildung der Erfindung wird der Restteig, bevor er mit Mehl gemischt/geknetet wird, verdichtet, homogenisiert und/oder (vor-) extrudiert. Dabei kann der Extruder meistens auch die Homogenisierung, das heißt die Zerkleinerung des Gewebes des Restteigs durch Einwirkung von Druck- und Scherkräften, miterfüllen. Alternativ und/oder zusätzlich ist auch eine Homogenisierung mittels eines Ultraschallgebers im Rahmen der Erfindung grundsätzlich denkbar.

Es liegt im Rahmen von Weiterbildungen der Erfindung, Kältemittel, beispielsweise Stickstoff und/oder Kohlendioxid beim Mischen bzw. Kneten und/oder beim vom Pelletieren seperierten Mahlschritt hinzuzugeben. Eine wichtige Ausbildung der Erfindung geht dahin, daß der Restteig und/oder das Mehl in jeweils miteinander koordinierten Dosen derart zugeführt werden, daß ein konstantes Restteig/Mehl-Mischungsverhältnis für die Schritte des Mischens/Knetens und Zerkleinerns erzielt wird. Es wird durch eine konkrete Ausbildung dahingehend gefördert, daß ein oder mehrere Meßsignale kontinuierlich erzeugt werden, die dem Gewicht und/oder dem Volumen des zu mischenden Restteigs entsprechen, und diese Meßsignale zur automatischen Kontrolle der dosierten Mehl- und/oder der Restteigzuführung, insbesondere der Zuführ-Geschwindigkeit, eingegeben werden.

Zur Lösung der zuvor anhand des Standes der Technik herausgearbeiteten Problematik wird bei einer Vorrichtung mit den eingangs genannten Merkmalen erfindungsgemäß vorgeschlagen, daß die Zerkleinerungseinrichtung als Pelletiereinrichtung ausgebildet ist. Wie bereits dargelegt, kann diese Pelletiereinrichtung konstruktiv und herstellungstechnisch einfach ausgebildet sein, wobei insbesondere eine Vielzahl von gefahr- und unfallträchtigen Werkzeugen unterschiedlichen Typs und mit hoher Umlaufgeschwindigkeit vermieden sind. So kann die Pelletiereinrichtung in weiterer Ausbildung der Erfindung eine Lochplatte, durch die die erzeugte Restteig/Mehl-Mischung durchgedrückt wird, und eine Schneideinrichtung, z. B. in Form eines Schneidmessers, ausgeführt sein; dabei wird die Restteig/Mehl-Mischung des eines Extruders zweckmäßig mit langsamer Drehgeschwindigkeit zur Lochplatte gefördert.

Nach einer anderen Ausbildung dieser Erfindungsalternative wird die Restteig-Zuführeinrichtung ebenfalls als (weiterer) Extruder ausgebildet, dem eine Dosiereinrichtung, beispielsweise in Form einer Bandwaage, nachgeschaltet ist. Eine alternative Ausbildung geht dahin, die Restteig-Zuführeinrichtung als Förderband zu realisieren, in das ein Gewichts- und/oder Volumenmessgerät für den beförderten Restteig integriert ist. Der Gesichtspunkt des Einbaus eines Messgeräts läßt sich in vorteilhafter Weiterbildung der Erfindung dahingehend nutzen, ein oder mehrere dem Messergebnis entsprechende (elektrische ) Ausgangssignale zu erzeugen, die den Antrieb des Restteig-Förderbandes und/oder der Mehldosiereinrichtung jeweils zu deren Steuerung und/oder Regelung zugeführt sind.

Bei der oben erläuterten Nachordnung einer Granulatmühle nach der Pelletiereinrichtung ergibt sich die Option, den aufbereiteten Restteig in Form von entweder Pellets oder Granulat zur Verfügung zu stellen. Diese Option kommt vor allem bei einer weiteren Ausbildung der Erfindung zum Tragen, nach der eine bidirektionale Fördereinrichtung, insbesondere in Form eines Förderbandes, vorgesehen ist, die an ihrer Eingangsseite mit der Pelletiereinrichtung verbunden ist, und deren erster Ausgang zur Mühle, und deren alternativer zweiter Ausgang zu einer separaten Pellet-Sammeleinrichtung führt.

Im Zusammenhang mit der Granulatmühle, die der Pelletiereinrichtung nachgeordnet ist, besteht eine weitere vorteilhafte Ausbildung der Erfindung darin, eine weitere Mehl-Dosiereinrichtung zwischen der Pelletiereinrichtung und der Mühle vorzusehen. So kann noch nachträglich Mehl zudosiert werden, gegebenenfalls indem dieses auf die Fördereinrichtung zur Granulat-Mühle gebracht wird.

Bei der erläuterten Verwendung der Granulat-Mühle, insbesondere wenn eine Turbo-Mühle eingesetzt wird, stellt sich das Problem des Abscheidens der mehlartigen Granulatkörnchen von dem Trägerluftstrom. Dem wird im Rahmen der Erfindung dadurch begegnet, daß an die Mühle ein Abscheider beispielsweise in Form eines abreinigbaren Filters oder eines Zyklons zur Trennung der Granulatkörnchen vom Trägerluftstrom angeschlossen ist.

Damit das erfindungsgemäße Restteig-Vewertungssystem mit einer kompakten, raumsparenden Bauweise realisierbar ist, wird im Rahmen einer konstruktiven Ausgestaltung der Erfindung vorgeschlagen, daß der Restteig-Zuführ-Extruder (Vorextruder) und der nachgeschaltete Misch- bzw. Knetextruder (Haupt- oder Nachextruder) gegenüber der Horizontalen jeweils geneigt sind, und zwar zueinander gegensinnig geneigt, dergestalt, daß deren Eingänge bzw. Aufgabeöffnungen jeweils am tiefergelegenen in deren Ausgänge bzw. Ausgangsöffnungen jeweils am höhergelegenen Ende angeordnet sind. So befindet sich beispielsweise die Aufgabeöffnung des Vorextruders für noch unbehandeltem Restteig an dessen tiefergelegenem Ende, während dessen Ausgang am höhergelegenem Ende angeordnet ist; dieser Ausgang kann dann ohne weiteres unmittelbar über der tiefergelegenen Aufgabeöffnung des Nachextruders positioniert sein, der wiederum schräg nach oben verläuft und über seine am höheren Ende gelegene Ausgangsöffnung die Mehl/Restteigmischung zur Pelletiereinrichtung befördert.

Um die erfindungsgemäße Restteig-Aufbereitungsanlage entsprechend dem Materialdurchsatz steuern oder regeln zu können, und insbesondere ein konstantes Restteig/Mehl-Mischungsverhältnis kontinuierlich beibehalten zu können, wird nach einer weiteren Ausbildung der Erfindung vorgeschlagen, daß der Ausgang des Vorextruders und/oder der Eingang des Nachextruders von einer oder mehreren Lichtschranken abgetastet bzw. überwacht werden, wobei deren Signalausgänge einem oder mehreren Extruder und/oder Mehldosiereinrichtungs-Antrieben jeweils zu deren Steuerung und/oder Regelung zugeführt werden.

Weitere Einzelheiten, Merkmale und Vorteile der Erfindung ergeben sich aus der nachfolgenden Beschreibung bevorzugter Ausführungsformen der Erfindung Sowie anhand der Zeichnungen. Diese zeigen in:
- Fig. 1: ein Fließbild des erfindungsgemäßen Verfah-rensprinzips,
- Fig. 2: eine schematische gerätetechnische Darstellung der erfindungsgemäßen Vorrichtungteilweise im Längsschnitt,
- Fig. 3: eine konstruktive Darstellung einer entsprechenden Vorrichtung in Seitenansicht,
- Fig. 4: eine schematische, gerätetechnische Darstellung einer weiter abgewandelten Vorrichtung nach der Erfindung teilweise im Längsschnitt.

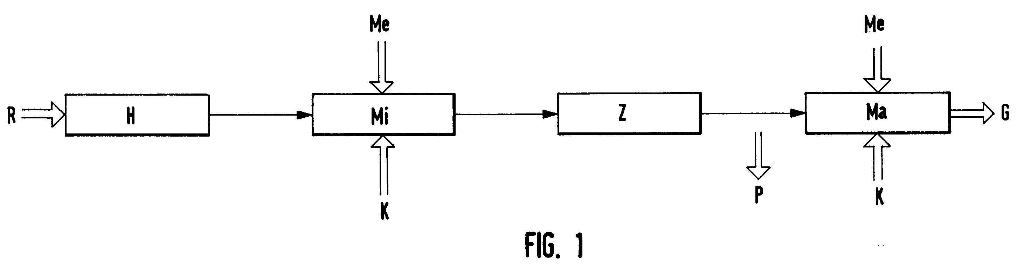

Gemäß Fig. 1 weist das erfindungsgemäße Verfahren folgende Grundoperationen auf: das Homogenisieren H von anfallendem Restteig R, das vor allem das Verdichten der mit unterschiedlicher Dichte ankommenden Teigreste zu einem homogenen Teigstrang umfaßt; das nachfolgende Mischen Mi dieses Teigstrangs mit Mehl Me zur Herabsetzung der Teigfeuchte und Klebeneigung, wobei auch Kohlendioxid oder Stickstoff als Kältemittel K zugesetzt werden können; das Zerkleinern Z der aus dem Mischen Mi resultierenden Masse, indem diese zu einzelnen Pellets P geformt wird; und anschließend das Mahlen Ma der pelletierten Masse bzw. der Pellets P zur Erzeugung von Granulat G, wobei nochmals Mehl Me und/oder Kältemittel K zugeführt werden können. Die zugeführten Komponenten Mehl Me und gegebenenfalls Kältemittel K werden in bekannten Verhältnissen entsprechend der ankommenden Teigrestemenge zudosiert. Weiterhin ist in Fig. 1 die Möglichkeit angedeutet, die Pellets P bereits vor dem Mahlvorgang Ma abzuziehen und diese z. B. zu lagern oder anderweitig weiterzuverarbeiten. Der anfallende Restteig R wird mit Mehl Me im Schritt Mi in einem derartigen Verhältnis gemischt, daß nach dem Zerkleinern Z die Teilchen des Granulates nicht mehr intensiv zusammenkleben. An die Form der Teigreste brauchen keine Ansprüche gestellt zu werden (s. unten), so daß unterschiedliche Restteigformen gegebenenfalls mit unterschiedlichen Teigfeuchten verarbeitet werden können.

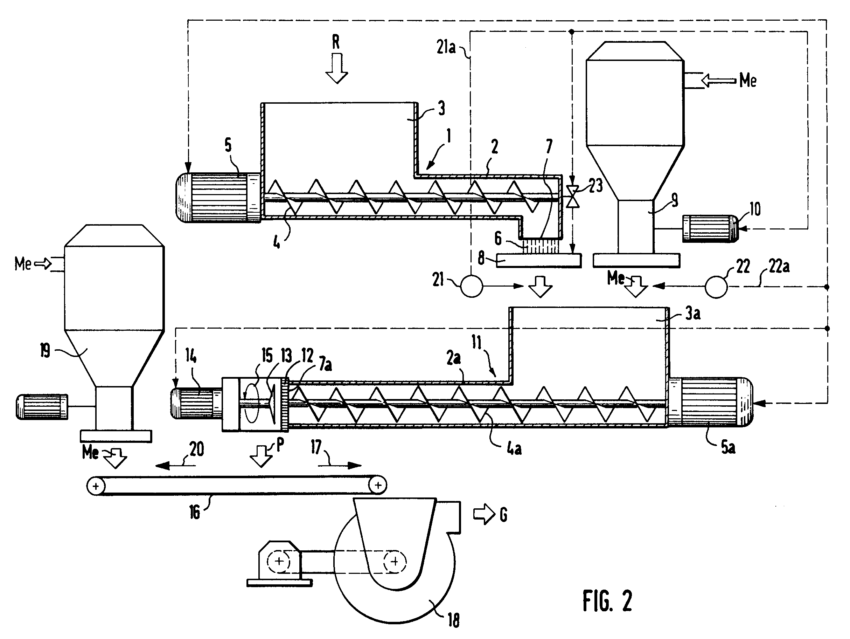

Beim Ausführungsbeispiel nach Fig. 2 weist die erfindungsgemäße Vorrichtung einen Vorextruder 1 auf, dessen Fördertrog 2 über eine Aufgabeöffnung 3 mit Teigresten R beschickt wird. Innerhalb des Fördertrogs 2 befindet sich eine Förderschnecke 4, die von einer zugehörigen Antriebseinheit 5 gedreht wird. Im Fördertrog 2 werden die mit unterschiedlicher Dichte ankommenden Teigreste R aufgrund der Rotation der Schnecke 4 homogenisiert und dabei zu einem kontinuierlichen Teigstrang 6 geformt bzw. verdichtet, der am Ausgang 7 des Vorextruders 1 austritt. Im Ausgangsbereich befindet sich eine Dosiereinrichtung 8, beispielsweise eine Bandwaage, mit der der austretende bzw. ankommende Teigstrang 6 mengenmäßig erfaßt wird. Dieser gelangt gemeinsam mit zudosiertem Mehl Me aus einem Mehldosierer 9, der von einer zugehörigen Antriebseinheit 10 betrieben wird, in einen Haupt- oder Nachextruder 11. Dieser ist - ähnlich wie der Vorextruder 1 - mit einem Fördertrog 2a, einer Aufgabeöffnung 3a, einer Antriebseinheit 5a und einem Ausgang 7a ausgebildet. Abweichend vom Vorextruder 1 jedoch ist als Förderorgan eine Doppelschnecke 4a verwendet. Der Ausgang 7a des Nachextruders 11 ist mit einer Lochplatte 12 abgeschlossen, durch die die Masse aus Teig und Mehl mittels der Doppelschnecke 4a gedrückt bzw. gepreßt wird. Der Misch- und Knetvorgang im Nachextruder 11 (Doppelschneckenextruder) erfolgt bei niedrigen Drehzahlen, um den Energieeintrag und damit die Temperaturerhöhung des Teig-Mehl-Gemisches gering zu halten. Leistungssteigerungen der Vorrichtung lassen sich durch höhere Drehzahlen des Misch- und Knet- bzw. Nachextruders 11 erreichen. Die entstehende gesteigerte Temperaturerhöhung kann dann durch Zugabe von Kältemitteln kompensiert werden.

Eine hinter der Lochplatte 12 des Nachextruders 11 angeordnete Schneideinrichtung 13, beispielsweise rotierende Messer, schneidet die aus der Lochplatte 12 austretenden Stränge in kleiner Abschnitte, nämlich Pellets P. Dabei wird sie von einer zugeordneten Antriebseinheit 14 in Drehung 15 versetzt. Von der Schneideinrichtung 13 gelangen die Pelletabschnitte P auf ein Förderband 16, das in seiner einen Transportrichtung 17 die Pellets in eine Turbomühle 18 befördert, wo sie zu feinem, mehlähnlichem Granulat G gemahlen werden. Dies läßt später eine problemlose Verteilung innerhalb eines Neuteiges zu. Zur Beeinflussung der Feuchte der Teigpellets P bzw. des gemahlenen Granulats G kann zusätzlich über einen weiteren Mehldosierer 19 Mehl speziell für den Mahlvorgang Ma in der Turbomühle 18 zugegeben werden, wodurch sich die Restfeuchte des Granulats G in weiten Grenzen variieren läßt. Wird die Bewegung des Förderbandes 16 in die andere Transportrichtung 20 umgekehrt, können die aus der Schneideinrichtung 13 resultierenden Pellets P von der Restteig-Aufbereitungsvorrichtung mittels des Förderbandes 16 abgezogen und zu einem Lagerort gebracht und dort gekühlt werden. Zu einem späteren Zeitpunkt können sie dann der Turbomühle 18 wieder zugeführt und zu Granulat G gemahlen werden, indem das Förderband 16 in Transportrichtung 17 zur Turbomühle 18 in Betrieb gesetzt wird.

Eine Erwärmung der Pellets beim Mahlvorgang tritt nur unwesentlich in Erscheinung, weil der Trägerluftstorm die Zerkleinerungsenergie in ausreichendem Maße abführen kann. Bei unzulässiger Erwärmung ist auch hier eine Zugabe von Kältemitteln angebracht; die Pellets brauchen aber für den Mahlvorgang nicht in gekühltem Zustand in die Turbomühle 18 gelangen.

Gemäß Fig. 2 sind ferner ein erstes Abtastorgan 21 und ein zweites Abtastorgan 22 angeordnet, die beispielsweise als Lichtschranken ausgeführt sein können. Das erste Abtastorgan 21 tastet den Bereich zwischen der dem Vorextruder 1 nachgeschalteten Dosiereinrichtung 8 ab und erzeugt ein entsprechendes Ausgangssignal 21a, das der Antriebseinheit 10 des erstgenannten Mehldosierers 9 und/oder einem mit der Dosiereinrichtung 8 integrierten Auslaßventil 23 jeweils zu deren Kontrolle (Steuerung und/oder Regelung) zugeführt wird. Das zweite Abtastorgan 22 beaufschlagt den Bereich zwischen dem ersten Mehldosierer 9 und der Aufgabeöffnung 3a des Nachextruders 11 und erzeugt ein entsprechendes Ausgangssignal 22a, das den beiden Extruder-Antriebseinheiten 5, 5a sowie der Schneid/Pelletier-Antriebseinheit 14 jeweils zu deren Kontrolle (Steuerung und/oder Regelung ) zugeführt wird. Mit der Kontrolle durch das erste Abtastorgan 21 läßt sich ein vorspezifiziertes und konstantes Teig/Mehl-Mengenverhältnis für das nachfolgende Mischen Mi im Nachextruder 11 herbeiführen. Durch die Kontrolle über das zweite Abtastorgan 22 werden die Extruder 1, 11 und die Schneideinrichtung 13 je nach zugeführter bzw. verfügbarer Mehlmenge angesteuert.

Das im Ausgang der Turbomühle 18 anfallende Granulat G kann mit an sich bekannten Abscheidegeräten, wie Zyklon oder Filter, vom Turbomühlen-Trägerluftstrom getrennt werden.

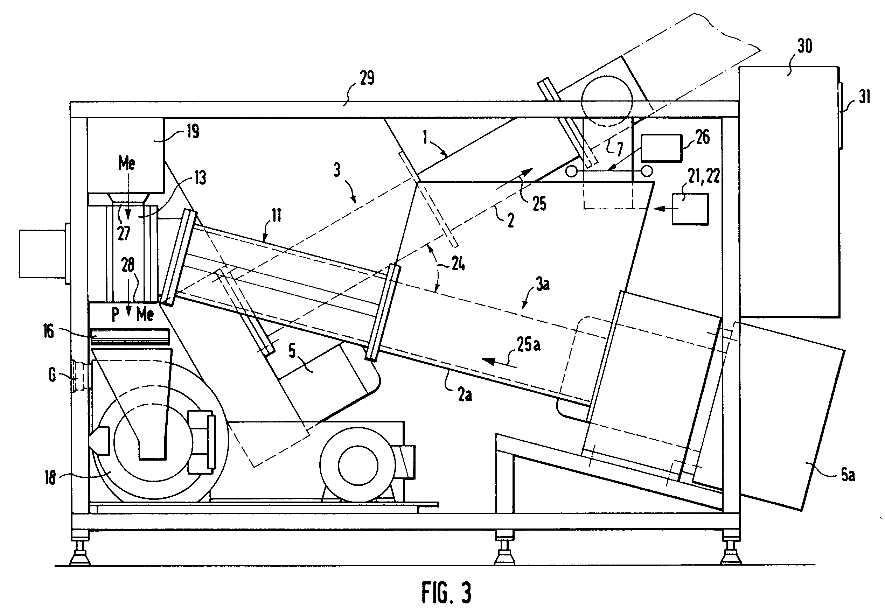

In Fig. 3 ist für eine erfindungsgemäße Restteig-Aufbereitungsanlage etwa nach Fig. 2 der konstruktive Aufbau näher skizziert: Gleiche Bezugsziffern bezeichnen entsprechende Teile. Die etwa zylindrische Fördertröge 2, 2a des Vorextruders 1 und des Nachextruders 11 schließen - jeweils gegenüber der Horizontalen geneigt verlaufend - miteinander einen spitzen Winkel 24 ein. Die Förderrichtungen 25, 25a verlaufen bei beiden Extrudern 1, 11 jeweils vom tiefergelegenen Ende zum höhergelegenen Ende. Am Ausgang 7 des Extruders 1 ist dabei noch eine (in Fig. 2 nicht gezeichnete) Trennvorrichtung 26 angedeutet, die von einem Abtastorgan 21, 22 gesteuert sein kann. Der Ausgang 7 am höhergelegenen Ende des Vorextruders 1 ist oberhalb und unmittelbar über der Aufgabeöffnung 3a am tiefergelegenen Ende des Nachextruders 11 angeordnet, so daß der Teigstrang 6, gegebenenfalls in Abschnitte getrennt, in die Nachextruder-Aufgabeöffnung 3a fallen kann. Dort wird er mit Mehl gemischt der Schneideinrichtung 13 am höhergelegenen Ende des Nachextruders 11 zugeführt. Diese besitzt eine obere Öffnung 27, durch die von einem (zweiten) Mehldosierer 19 herrührendes zusätzliches Mehl Me in die Schneideinrichtung 13 gelangen kann. Durch deren weitere, untere Öffnung 28 gelangt das Mehl Me zusammen mit den Pellets auf das Förderband 16. Die Antriebseinheiten 5, 5a sind jeweils als Aufsteckgetriebemotoren ausgeführt. Die gesamte Anordnung aus Vorextruder 1, Nachextruder 11, Schneideinrichtung 13, Mehldosierer 19 und Turbomühle 18 ist von einem Chassis 29 umgeben, an dessen Außenseite ein Schaltschrank 30 mit Bedienfeld 31 montiert ist. Wegen der weiteren Struktur und Funktionsweise wird auf Fig. 2 verwiesen.

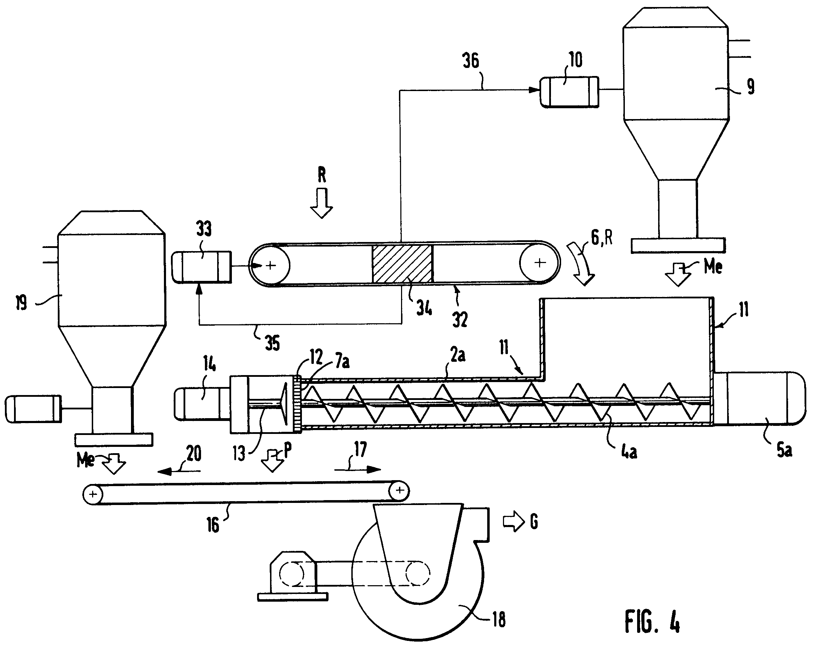

Die Erfindung ist nicht auf diese Ausführungsbeispiele beschränkt: So ist gemäß Fig. 4 der Vorextruder 1 durch ein Vorförderband 32 mit zugehöriger Antriebseinheit 33 ersetzt, dem Restteig R unverarbeitet zugeführt wird. Mit diesem Förderband 32 ist eine Gewichtsmesseinrichtung 34, beispielsweise ein Wägeband, zusammenwirkend integriert. Das Wägeband 34 erzeugt Ausgangssignale 35, 36, die einerseits der Förderband-Antriebseinheit 33 und andererseits dem Antrieb 10 des Mehldosierers 9 jeweils zu deren Regelung zugeführt werden. Dadurch läßt sich das angestrebte, kontinuierlich konstante Teig/Mehl-Mengenverhältnis mit hoher Genauigkeit einregeln, indem entsprechend dem Gewicht des Restteigs R die Fördergeschwindigkeit des Förderbandes 32 und die Zuführ-Menge für Mehl Me des Mehldosierers 9 eingestellt werden.

## Patentansprüche

1. Verfahren zur Aufbereitung von Restteig (R) für Neuteig, indem der Restteig (R) mit Mehl (Me) gemischt und/oder geknetet und diese Mischung (Mi) zerkleinert wird, dadurch gekennzeichnet, daß das Zerkleinern (Z) mittels einer Pelletiereinrichtung (12, 13) durchgeführt wird.

2. Verfahren nach Anspruch 1, dadurch gekennzeichnet, daß das Mischen beziehungsweise Kneten (Mi) mittels eines Extruders (11) durchgeführt wird.

3. Verfahren nach Anspruch 1 oder 2, dadurch gekennzeichnet, daß die Pellets (P) zu Granulat (G) gemahlen (Ma) werden.

4. Verfahren nach Anspruch 3, dadurch gekennzeichnet, daß beim Mahlen (Ma) zusätzlich Mehl (Me) hinzugegeben wird.

5. Verfahren nach Anspruch 3 oder 4, dadurch gekennzeichnet, daß die Granulatkörnchen (G) aus einem Trägerluftstrom abgeschieden werden.

6. Verfahren nach einem der vorangehenden Ansprüche, gekennzeichnet durch ein derartiges Mischungsverhältnis von Restteig (R) mit Mehl (Me), daß ein Zusammenkleben der Pellets (P) und/oder gegebenenfalls der Granulat-Körnchen (G) weitgehend verhindert ist.

7. Verfahren nach einem der vorangehenden Ansprüche, dadurch gekennzeichnet, daß der Restteig (R) vor seinem Mischen beziehungsweise Kneten (Mi) mit Mehl (Me) verdichtet, homogenisiert (H), mit Ultraschall beaufschlagt und/oder extrudiert (1) wird.

8. Verfahren nach einem der vorangehenden Ansprüche jeweils mit Anspruch 2, dadurch gekennzeichnet, daß der Extruder (11) bei einer derart niedrigen Drehzahl betrieben wird, daß eine spürbare Temperaturerhöhung vermieden ist.

9. Verfahren nach einem der vorangehenden Ansprüche, gekennzeichnet durch Zugabe von Kältemittel (K), beispielsweise Stickstoff und/oder Kohlendioxid, beim Mischen beziehungsweise Kneten (Mi) und/oder gegebenenfalls Mahlen (Ma).

10. Verfahren nach einem der vorangehenden Ansprüche, gekennzeichnet durch eine dosierte (8, 9) Restteig- und/oder Mehl-Zuführung derart, daß ein konstantes Restteig/Mehl-Mischungsverhältnis für das Mischen beziehungsweise Kneten (Mi) und Zerkleinern (Z) erzeugt wird.

11. Verfahren nach Anspruch 10, dadurch gekennzeichnet, daß ein Meßsignal (35, 36)über das Gewicht und/oder Volumen des zum Mischen (Mi) zugeführten Restteigs (R) kontinuierlich erzeugt und zur automatischen Kontrolle der dosierten Mehl- und/oder der Restteig-Zuführung (9, 32), insbesondere deren Geschwindigkeit, verwendet wird.

12. Vorrichtung zur Aufbereitung von Restteig für Neuteig, mit mindestens je einer Zuführ- und Dosiereinrichtung (1, 8, 9, 32) für Restteig (R) und zuzumischendes Mehl (Me), und hintereinander nachgeschalteten Mischbeziehungsweise Knet- und Zerkleinerungseinrichtungen (11, 12, 13), insbesondere zur Durchführung des Verfahrens gemäß einem der vorangehenden Ansprüche, dadurch gekennzeichnet, daß die Zerkleinerungseinrichtung (12, 13) als Pelletiereinrichtung ausgebildet ist.

13. Vorrichtung nach Anspruch 12, dadurch gekennzeichnet, daß die Pelletiereinrichtung eine Lochplatte (12) und eine nachgeschaltete Schneideinrichtung (13) aufweist, und die Misch- beziehungsweise Kneteinrichtung als an der Lochplatte endender Extruder (11), insbesondere Doppelschnecken-Extruder, ausgeführt sind.

14. Vorrichtung nach Anspruch 12 oder 13, dadurch gekennzeichnet, daß die Restteig-Zuführeinrichtung als gegebenenfalls weiterer Extruder (1), insbesondere Einschnecken-Extruder, mit nachgeschalteter Dosiereinrichtung (8), beispielsweise Bandwaage, ausgeführt ist.

15. Vorrichtung nach Anspruch 12 oder 13, dadurch gekennzeichnet, daß die Restteig-Zuführeinrichtung als Förderband (32) mit integriertem Gewichts- und/oder Volumenmeßgerät (34) für den geförderten Restteig (R) ausgeführt ist.

16. Vorrichtung nach Anspruch 15, dadurch gekennzeichnet, daß das Meßgerät (34) ein oder mehrere dem Meßergebnis entsprechende Ausgangssignale (35, 36) erzeugt, die dem Antrieb (33, 10) des Restteig-Zuführ-Förderbandes (32) und/oder der Mehl-Dosiereinrichtung (9) jeweils zu deren Steuerung und/oder Regelung zugeführt sind.

17. Vorrichtung nach einem der Ansprüche 12 bis 16, gekennzeichnet durch eine der Pelletiereinrichtung (12, 13) nachgeschaltete Mühle (18) zur Erzeugung von Granulat (G).

18. Vorrichtung nach Anspruch 17, gekennzeichnet durch eine bidirektional betreibbare Fördereinrichtung (16), insbesondere in Form eines Förderbandes, die eingangsseitig mit der Pelletiereinrichtung (12, 13) verbunden ist, und deren erster Ausgang zur Mühle (18), und deren alternativer zweiter Ausgang zu einer separaten Pellet-Sammeleinrichtung führt.

19. Vorrichtung nach Anspruch 17 oder 18, gekennzeichnet durch eine weitere Mehl-Dosiereinrichtung (19), die der Pelletiereinrichtung (12, 13) und der Mühle (18) zwischengeschaltet und/oder gegebenenfalls mit der Fördereinrichtung (16) ausgangsseitig verbunden ist.

20. Vorrichtung nach Anspruch 17, 18 oder 19, gekennzeichnet durch einen der Mühle (18) nachgeschalteten Abscheider beispielsweise in Form eines abreinigbaren Filters oder Zyklons zur Trennung der Granulatkörnchen (G) von einem Trägerluftstrom.

21. Vorrichtung nach einem der Ansprüche 12 bis 20, jeweils mit Anspruch 13 und 14, dadurch gekennzeichnet, daß der Restteig-Zuführ-Extruder und der Misch- beziehungsweise Knet-Extruder gegenüber der Horizontalen zueinander gegensinnig geneigt (24), und deren Eingang (3, 3a) an ihrem jeweils tiefer gelegenen und deren Ausgang (7) an ihrem jeweils höher gelegenen Ende angeordnet sind.

22. Vorrichtung nach einem der Ansprüche 12 bis 21, jeweils mit Anspruch 13 und 14, dadurch gekennzeichnet, daß der Ausgang des Restteig-Zuführ-Extruders (7) und/oder der Eingang des Misch- beziehungsweise Knet-Extruders (11) von einem oder mehreren Abtastorganen (21, 22), zum Beispiel Lichtschranken, abgetastet werden, deren Signalausgänge (21a, 22a) einem oder mehreren Extruder- und/oder Mehl-DosiereinrichtungsAntrieben (5, 5a, 10) jeweils zu deren Steuerung und/oder Regelung zugeführt werden.
